(19) Europäisches Patentamt
European Patent Office
Office européen des brevets

(11) Numéro de publication: **0 221 824 B1**

# (12) FASCICULE DE BREVET EUROPEEN

(45) Date de publication du fascicule du brevet: **26.07.89**

(51) Int. Cl.⁴: **C08G 77/06**

(21) Numéro de dépôt: **86420236.1**

(22) Date de dépôt: **18.09.86**

(54) **Procédé de polymérisation d'oligomères de polydiorganosiloxanes dans un fluide à pression supraatmosphérique qui est un gaz dans les conditions normales.**

(30) Priorité: **25.09.85 FR 8514404**

(43) Date de publication de la demande:
**13.05.87 Bulletin 87/20**

(45) Mention de la délivrance du brevet:
**26.07.89 Bulletin 89/30**

(84) Etats contractants désignés:
**AT BE CH DE FR GB IT LI LU NL SE**

(56) Documents cités:
**US-A- 2 759 006**
**US-A- 2 759 007**
**US-A- 2 759 008**

(73) Titulaire: **RHONE-POULENC CHIMIE, 25, quai Paul Doumer, F-92408 Courbevoie Cédex(FR)**

(72) Inventeur: **Lebrun, Jean-Jacques, 24, rue Pierre Brunier, F-69300 Caluire(FR)**
Inventeur: **Sagi, Ferenc, 133, rue Ferdinand Buisson, F-69003 Lyon(FR)**
Inventeur: **Soria, Meyer, 29, rue Clément Michut, F-69100 Villeurbanne(FR)**

(74) Mandataire: **Seugnet, Jean Louis et al, RHONE-POULENC INTERSERVICES Service Brevets Chimie Centre de Recherches de Saint-Fons B.P. 62, F-69192 Saint-Fons Cédex(FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).



ACTORUM AG

## Description

La présente invention concerne un procédé de polymérisation d'oligomères polydiorganosiloxanes dans au moins un fluide à pression supraatmosphérique qui est un gaz dans les conditions normales de température et de pression.

On connait déjà depuis longtemps de nombreux procédés de fabrication d'huiles ou de gommes polydiorganosiloxanes par catalyse acide ou basique à partir d'oligomères cycliques ou acycliques de polydiorganosiloxanes (voir l'ouvrage de NOLL - Chemistry and Technology of Silicones, edition 1968, pages 219 à 229).

Ces procédés conduisent à des huiles ou à des gommes qui sont en particulier les constituants de base des compositions polydiorganosiloxanes mono- ou bicomposantes durcissant en élastomère en présence d'un catalyseur, à chaud ou à température ambiante.

Ces huiles ou ces gommes sont également des constituants de base d'hydrofugeants textiles, d'anti-mousse, d'agents de démoulage, de liquides hydrauliques, etc.....

Dans la plupart des applications ci-dessus et en particulier dans le cas des liquides hydrauliques et des compositions polydiorganosiloxanes durcissant en élastomère il est souhaitable de disposer d'huiles ou de gommes présentant une faible polydispersité.

Par ailleurs, dans les diverses applications des huiles et des gommes on utilise des huiles et des gommes présentant une viscosité bien déterminée et il serait souhaitable de disposer d'un procédé de polymérisation permettant de règler de façon simple et précise la viscosité du polymère obtenu.

Le procédé de la présente invention permet précisément d'obtenir une huile ou une gomme polydiorganosiloxane présentant à la fois une faible dispersité et une viscosité désirée.

La présente invention concerne en effet un procédé de polymérisation par catalyse acide ou basique d'oligomères polydiorganosiloxanes en vue d'obtenir un polydiorganosiloxane de masse moléculaire élevée, caractérisé en ce qu'on effectue la polymérisation dans au moins un fluide sous pression supraatmosphérique qui est un gaz dans les conditions normales de température et de pression, l'état physique dudit fluide étant durant la polymérisation choisi parmi l'état de gaz sous pression supraatmosphérique, l'état liquide et l'état supercritique et en ce qu'on récupère le polydiorganosiloxane de masse moléculaire élevée par détente dudit fluide. On entend par polymérisation selon l'invention toutes les réactions qui permettent d'aboutir à partir d'oligomères polydiorganosiloxanes, à des polymères polydiorganosiloxanes de masse moléculaire plus élevée.

Ces réactions sont en particulier les homo et co-polymérisations, les réarrangements et les homo et co-polycondensations. On sait que les réactions de polymérisation et de réarrangement interviennent plus spécialement quand l'oligomère de départ est principalement un cyclopolydiorganosiloxane et que les réactions de polycondensation intermoléculaire interviennent quand l'oligomère de départ est essentiellement un alpha, oméga-dihydroxypolydiorganosiloxane.

Comme fluide on peut utiliser tout composé gazeux dans les conditions normales (pression atmosphérique, température de 20 °C) qui ne soit pas réactif avec les silicones et les catalyseurs, qui soit un solvant à l'état de gaz sous pression supraatmosphérique, à l'état liquide et à l'état supercritique des oligomères et des polymères de masse moléculaire plus élevée formés à partir des oligomères, et qui précipite ce polydiorganosiloxane de masse moléculaire élevée formé en cours de réaction.

On peut utiliser pour la mise en oeuvre du procédé de l'invention l'anhydride carbonique $CO_2$, l'air, les hydrocarbures gazeux comme le méthane, l'éthane et le propane, certains hydrocarbures fluorés (fréons) , l'azote, etc .....

Le type de catalyseur à caractère basique ou acide doit être choisi en fonction du caractère éventuellement basique ou acide du fluide. On peut ainsi utiliser avec un fluide neutre (comme $N_2$) un catalyseur indifféremment acide ou basique. Par contre avec un fluide acide (comme le $CO_2$) on ne peut utiliser qu'un catalyseur acide.

Comme catalyseur on peut choisir un des catalyseurs indiqués aux pages 219-229 de l'ouvrage de NOLL précité.

Ainsi comme catalyseur basique pour la catalyse anionique on peut utiliser les hydroxydes de métaux alcalins en particulier l'hydroxyde de potassium et de césium et les silanolates de métaux alcalins en particulier de potassium ou de sodium éventuellement complexés, par des agents séquestrants ou cryptans.

Comme catalyseur acide pour la catalyse cationique, on peut utiliser :

- les acides protoniques ou acides de Brönstedt tel que notamment l'acide sulfurique et ses dérivés (brevet américain US-A-2 381 366), les acides sulfoniques purs (brevet américain US-A-3 322 722) ou déposés sur résines (brevet américain US-A-3 694 405 et US-A-4 426 508), les diorganosilylsulfates (brevet français FR-A-1 451 269), les acides perhalogénoalcanesulfoniques (brevet américain US-A-2 469 883), les terres acides du type Actisil ® ou Tonsil ® (brevet américain US-A-2 460 805),
- les acides de Lewis tels que $FeCl_3$ ; $SnCl_4$ ; $TiCl_4$ ; $BF_3$ ; $ZnCl_2$.

Les oligomères de polydiorganocyclosiloxane à traiter peuvent être choisis parmi :

- au moins un polydiorganocyclosiloxane (a) de formule :

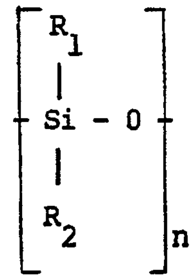

(a)

- au moins un polydiorganosiloxane (b) de formule :

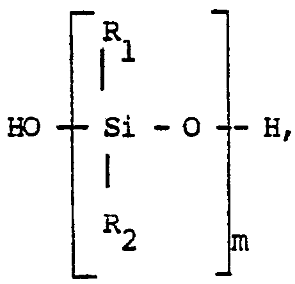

(b)

et leurs mélanges.

Les oligomères (a) et (b) peuvent en outre contenir au moins un polydiorganosiloxane (c) de formule :

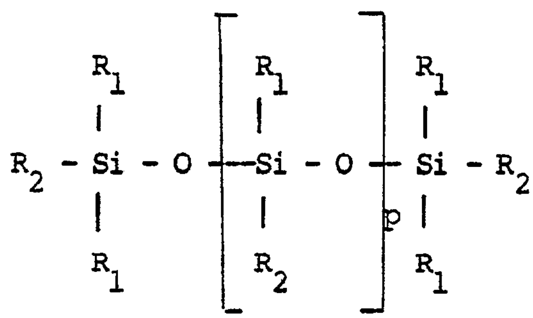

(c)

et/ou un polydiorganosiloxane (d) de formule :

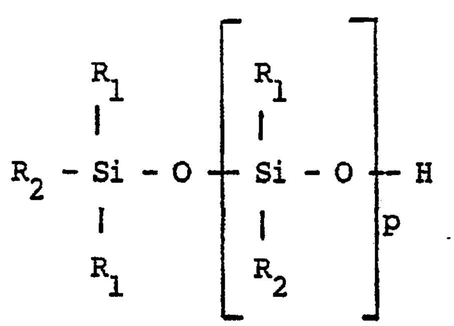

(d)

Dans la formule (a) les divers symboles représentent :

- n : un nombre entier supérieur ou égal à 3 et généralement inférieur à 10.
- $R_1$ : un atome d'hydrogène, un radical alkyle, alkényle, halogénoalkyle, halogénoalkényle, ces divers radicaux ayant de 1 à 5 atomes de carbone et comportant la cas échéant de 1 à 7 atomes de chlore et/ou de fluor ; un radical cycloalkyle, cycloalkényle ces radicaux ayant de 3 à 8 atomes de carbone et étant éventuellement substitués par 1 à 4 atomes de chlore et/ou de fluor ; un radical cyanoalkyle ayant de 3 à 4 atomes de carbone ; un radical phényle, alkylphényle ou phénylalkyle ayant de 6 à 8 atomes de carbone, ces radicaux étant éventuellement substitués par 1 à 4 atomes de chlore et/ou de fluor.

$R_2$ : un radical tel que $R_1$ ou encore un groupement alkoxy de formule $-OR_1$, ou un radical hydroxy-.

A titre illustratif, on peut citer parmi les radicaux $R_1$ les radicaux suivants :

un atome d'hydrogène

les groupes : méthyle ; éthyle ; propyle ; isopropyle ; butyle ; isobutyle ; alpha-pentyle ; t-butyle ; chlorométhyle ; dichlorométhyle ; alpha-chloroéthyle ; alpha, béta-dichlorétnyle; fluorométhyle ; difluorométhyle ; alpha, béta-difluoroéthyle ; trifluoro-3,3-3 propyle ; difluoro cyclopropyle ; pentafluoro-3,3-4,4,4 butyle ; heptafluoro- 3,3,4,4,5,5,5 pentyle ; cyclopentyle ; cyclohexyle ; cyclohexenyle ; béta-cyanoéthyle ; gamma-cyanopropyle ; phényle ; p-chlorophényle ; m-chlorophényle ; dichloro-3,5 phényle ; trichlorophényle ; tétrachlorophényle ; o-, p-, ou m-tolyle ; alpha, alpha, alpha-trifluorotolyle ; xylyles comme diméthyl-2,3 phényle ; diméthyl-3,4 phényle.

Préférentiellement n est égal à 3, 4, 5 ou 6 et encore plus avantageusement 3 ou 4 et $R_1$ représente un atome d'hydrogène, un radical méthyle, ou vinyle, ces radicaux étant éventuellement substitués par un ou deux atomes de chlore et/ou de fluor ou un radical trifluoropropyle ; un radical phényle tolyle, xylyle éventuellement substitué par un ou deux atomes de chlore et/ou de fluor,

$R_2$ représente préférentiellement outre les significations préférentielles du radical $R_1$ des radicaux hydroxy, méthoxy.

Tout particulièrement, on polymérise dans le cadre de la présente invention les cyclosiloxanes constitués par l'hexaméthylcyclotrisiloxane ($D_3$) et/ou de l'octaméthylcyclotétrasiloxane ($D_4$).

A titre illustratif, on peut citer parmi les cyclosiloxanes utilisables dans le cadre de la présente invention :

- l'hexaméthylcyclotrisiloxane ($D_3$)
- le triméthyl tris (trifluoropropyl) cyclotrisiloxane
- l'octaméthylcyclotétrasiloxane ($D_4$)
- l'octaphénylcyclotétrasiloxane
- le tétraméthylcyclotétrasiloxane
- le tétraméthyltétravinylcyclotétrasiloxane

Dans la formule (b) les radicaux $R_1$ et $R_2$ ont la même signification que dans la formule (a) indiquée ci-dessus, de plus m est un nombre entier compris entre 2 et 100 inclus.

Comme exemples de produit de formule (b) on peut citer les alpha, oméga dihydroxypolydiméthylsiloxane.

Dans les formules (c) et (d) $R_1$ et $R_2$ ont la même signification que ci-dessus et p est 0 ou un nombre entier compris entre 1 et 50 inclus.

Comme exemples de produit de formules (c) et (d) on peut citer :

- l'hexaméthyldisiloxane,
- le tétraméthyldivinyl-1,3 disiloxane,
- le tétraméthyl-1,1,3,3 disiloxane,
- le tétraphényldisiloxane diol, les alpha(triméthylsiloxy), oméga(hydroxy)polydiméthylsiloxane.

Quand on utilise des oligomères (c) et/ou (d) en combinaison avec les oligomères (a) et/ou (b) on obtient des polymères bloqués à une ou à chacune de leurs extrémités par des groupes triorganosilyle. La concentration de (c) et/ou (d) dans (a) et/ou (b) est un des paramètres. Un autre paramètre est l'état physique du milieu de polymérisation , température, pression permettant de contrôler le poids moléculaire du polymère. Plus la concentration de (c) et (d) augmente plus la masse moléculaire du polymère obtenu est faible. Plus la température augmente, plus la masse moléculaire obtenue augmente. Plus la pression augmente plus la masse moléculaire obtenue est faible. Cependant un des avantages importants apportés par le procédé de l'invention consiste en ce que pour des charges identiques en oligomères il est toutefois possible d'obtenir des masses moléculaires souhaitées en modifiant uniquement les paramètres tels que pression et température ce qui n'est que très difficilement obtenu par les procédés connus.

Il doit être également entendu que l'on ne sortirait pas du cadre de l'invention en associant aux oligomères (a), (b), (c) et (d) tels que précédemment définis une faible quantité représentant jusqu'à 20 % en poids par exemple d'un silane porteur d'un ou plusieurs groupements alcoxy tels que par exemple le méthyltriéthoxysilane, le vinyl-tris(méthoxyéthoxy)silane, le phényltriethoxysilane.

Selon une variante du procédé de l'invention, la polymérisation peut être effectuée au moins en partie en présence de charge ce qui permet d'obtenir directement un mélange silicone-charge directement utilisable notamment comme graisse électriquement isolante ou comme mélange utilisable dans la préparation de compositions organosiliciques durcissables en élastomère mono- et bi-composantes, ou comme élément actif des compositions antimousses.

La quantité de charges est quelconque. Il n'est pas indispensable d'introduire la totalité de la charge dans le réacteur dès le début de la réaction de polymérisation, cette introduction pouvant être effectuée sous une forme fractionnée en cours de réaction.

Les charges utilisables sont celles utilisées couramment dans les élastomères silicones, en particulier les charges acides ou neutres renforçantes ou semi renforçantes comme le noir de carbone, les silices de pyrogénation, les silices de précipitation, les terres de diatomées et le dioxyde de titane de pyrogénation. Les surfaces spécifiques BET sont généralement comprises entre 50 m2/g et 450 m2/g. Bien entendu, il faut choisir un système fluide de polymérisation - catalyseur - charge dont les 3 constituants soient compatibles par exemple le système $CO_2$ - acide alcanesulfonique - silice de pyrogénation.

Selon un mode préféré de réalisation du procédé de l'invention on utilise de préférence $CO_2$ associé à un catalyseur à caractère acide indiqué ci-dessus, le catalyseur étant de préférence un acide perhalogénoalcane sulfonique, comme l'acide trifluorométhane sulfonique et l'acide perfluoro-n-butane sulfonique, $CO_2$ est de préférence à l'état de gaz sous pression supraatmosphérique ou à l'état supercritique.

Le procédé selon l'invention peut être mis en oeuvre suivant les différentes méthodes de polymérisation continue ou discontinue, en catalyse homogène ou hétérogène, en particulier on peut utiliser un procédé de catalyse homogène continue avec introduction en continu des oligomères et recyclage dans le réacteur du fluide, du catalyseur et des oligomères de faible masse moléculaire obtenus après détente, cette dernière pouvant être fractionnée. Dans le cas de la catalyse hétérogène le catalyseur peut être à lit fixe, à lit agité ou bien à lit fluidisé par le fluide de polymérisation.

On a observé lors des essais aux $CO_2$ que la solubilité du polymère dans le milieu réactionnel diminue quand la concentration en oligomère diminue.

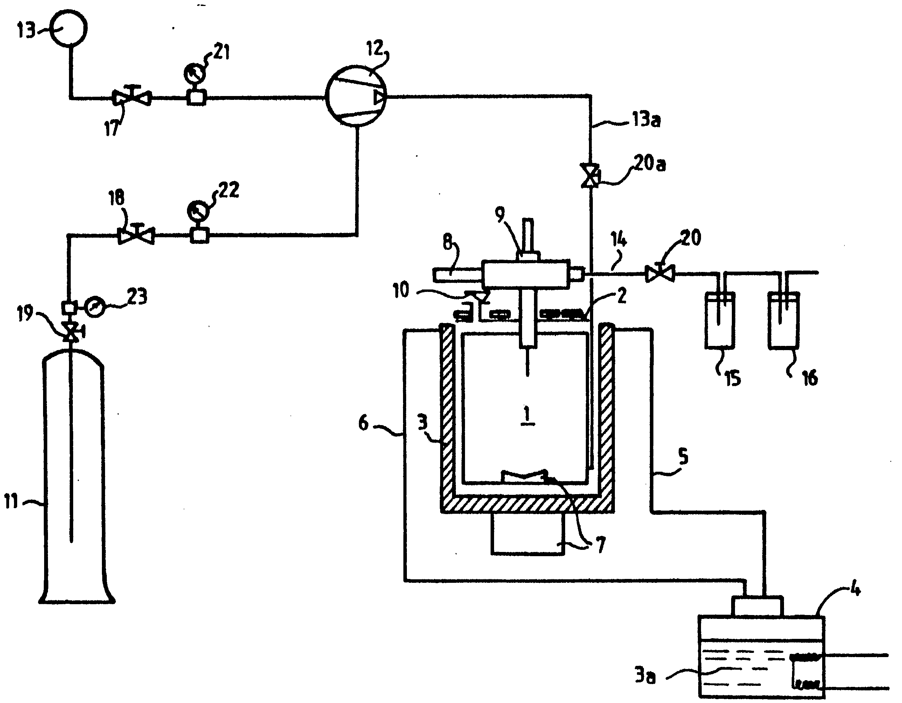

Les exemples suivants illustrent l'invention sans en limiter la portée, référence sera faite au dessin annexé sur lequel la figure unique représente un schéma d'un appareillage pilote permettant de mettre en oeuvre en discontinu le procédé de l'invention. Sauf indications contraires les pourcentages indiqués sont en poids.

- Exemples 1a, 2a et 3 à 5 :

On utilise l'appareillage représenté schématiquement à la figure unique. Sur cette figure on voit que le réacteur (1), d'un volume de 100 cm³ muni d'un couvercle (2) boulonné, est logé dans une enceinte (3) permettant d'ajuster la température du milieu réactionnel à l'intérieur du réacteur (1) par circulation à l'intérieur de l'enceinte (3) d'un fluide caloporteur (3a) provenant d'un bain thermostaté (4) et arrivant et sortant de l'enceinte (3) au moyen respectivement des tubulures (5) et (6). Le réacteur (1) est muni d'un agitateur magnétique (7), d'un capteur de pression (8), d'une sonde thermique (9) et d'une soupape d'éclatement (10).

La source de $CO_2$ est une bouteille (11) de $CO_2$ liquide reliée à un compresseur à membrane (12) alimenté par la source (13) d'air comprimé.

Le compresseur (12) injecte au bas du réacteur (1), par l'intermédiaire de la tubulure (13a) le $CO_2$ à la pression désirée.

Le réacteur (1) est relié par la tubulure (14) aux pots de détente (15) et (16).

Les tubulures reliant les différents éléments de l'appareillage sont munies des vannes (17), (18), (19) et (20) et (20a) et des manomètres (21), (22) et (23).

L'enceinte (3) thermostatée étant préchauffée à la température désirée, on introduit dans le réacteur (1) 40 g d'octaméthylcyclotétrasiloxane ($D_4$) et 70 mg d'acide trifluorométhanesulfonique.

On place le réacteur (1) dans l'enceinte thermostatée (3) et on le connecte à la tubulure (13) d'arrivée du $CO_2$. La pression du $CO_2$ est établie à l'intérieur du réacteur dans un laps de temps très court vis-à-vis de la durée de la polymérisation.

La polymérisation terminée on détend le $CO_2$ dans les pots de détente (15) et (16) préchauffés et on purge le réacteur (1) à l'aide d'environ 30 litres de $CO_2$ (mesurés dans les conditions normales). On traite le polymérisat et l'extrait obtenus par de la triéthylamine afin de désactiver le catalyseur. Le poids de polymère obtenu permet de calculer un rendement pondéral après détente (dénommé par la suite Rdt).

L'extrait est analysé par chromatographie en phase gazeuse.

Sur le polymère on effectue une microdévolatilisation de la façon suivante : on chauffe 2 g de polymère à 170 °C pendant 30 minutes sous 0,133 KPa. Le rendement pondéral de cette opération (dénommé par la suite RR), multiplié par le rendement après détente donne le rendement en polymère de la réaction.

Par ailleurs le polymère est analysé par chromatographie par perméation de gel afin de déterminer la masse moléculaire en poids (M w), la masse moléculaire en nombre (Mn) et l'indice de polydispersité

$$IP = \frac{Mw}{Mn} .$$

Mw et Mn sont exprimées en équivalent polystyrène.

La concentration initiale de $D_4$ exprimée en $g.kg^{-1}$ peut être calculée par la relation suivante :

$$(D_4)_o = \frac{\text{poids de } D_4}{\text{poids de } D_4 + \text{poids de } CO_2} \times 10^3$$

$$(D_4)_o = \frac{vD_4 \times dD_4}{[(vD_4 \times dD_4) + (V - vD_4)d} \times 10^3 \qquad (1)$$

Avec V = volume total de la cellule

$vD_4$ = volume de $D_4$

$V - vD_4$ = volume de $CO_2$

$dD_4$ = densité de $D_4$ en la considérant comme constante

d = densité du $CO_2$.

De l'équation (1) il vient :

$$vD_4 = \frac{V.d.(D_4)_o}{10^3.dD_4 - (D_4)_o(dD_4 - d)}$$

On peut donc calculer le volume de $D_4$ nécessaire pour garder une concentration initiale constante lorsque l'on fait varier la densité du $CO_2$ (par modification de la pression et/ou de la température).

En effet chaque variation de pression et de température du $CO_2$ entraîne une variation de sa densité. Il est donc nécessaire de modifier en conséquence le volume d'oligomère de départ afin de travailler à concentration initiale constante.

Afin de déterminer le temps de polymérisation néoessaire pour atteindre l'équilibre thermodynamique, on réalise les exemple 1a et 2a en absence de $CO_2$, mais sous azote à pression atmosphérique.

Dans les exemples 3 à 5 on effectue une polymérisation pour 3 états physique de $CO_2$ respectivement gazeux (g) supercritique (Sc) et liquide (L).

Les résultats sont rassemblés dans le tableau I ci-après :

Tableau I

| Ex. | P bars | T °C | Durée heures | Etat $CO_2$ | Rdt % | RR % | Rdt x RR | Mw | Mn | Ip |
|---|---|---|---|---|---|---|---|---|---|---|
| 1a | – | 60 | 0,5 | – | – | 35 | 35 | 220 000 | 107 000 | 2,10 |
| 2a | – | 60 | 1 | – | – | 85 | 85 | 620 000 | 210 000 | 2,95 |
| 3 | 8 | 60 | 1 | g | 100 | 83 | 83 | 523 000 | 256 000 | 2,05 |
| 4 | 87 | 58 | 1 | SC | 97 | 64 | 62 | 363 000 | 193 000 | 1,85 |
| 5 | 89 | 16 | 1 | L | 27 | 5 | 1 | 120 000 | * | * |

*: non mesurable

La concentration en $D_4$ dans le milieu réactionnel avant polymérisation $[D_4]_o$ est de 2,0 moles/l, la concentration du catalyseur dans le milieu réactionnel avant polymérisation $[C]_o$ est de $6.10^{-3}$ moles/l.

Du tableau I il ressort que les meilleurs résultats sur le plan du rendement en polymère et de la masse molaire sont obtenus dans $CO_2$ gaz. De façon générale, l'indice de polydispersité est très faible, par rapport aux masses obtenues. Par ailleurs les résultats des exemples 1a et 2a montrent qu'une demi-heure de réaction est insuffisante, mais qu'après une heure on obtient 85 % de polymère.

-Exemples 6 à 16 :

Dans ces exemples on répète le mode opératoire de l'exemple 4 ($CO_2$ supercritique) sauf que l'on fait respectivement varier la pression (exemples 6 à 9), la température (exemples 10 et 11) la durée de polymérisation (exemples 13 et 14) et la concentration en $D_4$ au temps t = 0 : $(D_4)_0$ en mole par litre de volume réactionnel moles/l (exemples 15 et 16).

Les résultats sont rassemblés dans le tableau II ci-après :

**Tableau II**

| Ex. | P bars | T °C | Durée heures | $dCO_2$ $g/cm^3$ | $(D_4)_0$ moles/l | Rdt détente % | RR % | Rdt x RR % | Mw | Mn | Ip |
|---|---|---|---|---|---|---|---|---|---|---|---|
| 6 | 87 | 58 | 1 | 0,30 | 2 | 97 | 64 | 62 | 363 000 | 193 000 | 1,85 |
| 7 | 112 | 56 | 1 | 0,37 | 2 | 73 | 35 | 25 | 280 000 | 150 000 | 1,85 |
| 8 | 137 | 52 | 1 | 0,50 | 2 | 98 | 8 | 8 | 65 000 | * | * |
| 9 | 190 | 55 | 1 | 0,72 | 2 | 71 | 2 | 1 | * | * | * |
| 10 | 87 | 58 | 1 | 0,30 | 2 | 97 | 64 | 62 | 363 000 | 193 000 | 1,85 |
| 11 | 89 | 82 | 1 | 0,18 | 2 | 99 | 67 | 67 | 456 000 | 217 000 | 2,10 |
| 12 | 100 | 53 | 0,25 | 0,36 | 2 | 87 | 9 | 8 | 90 000 | * | * |
| 13 | 92 | 56 | 0,25 | 0,30 | 2 | 94 | 12 | 11 | 150 000 | * | * |
| 14 | 87 | 58 | 1 | 0,30 | 2 | 97 | 64 | 62 | 363 000 | 193 000 | 1,85 |
| 15 | 87 | 58 | 1 | 0,30 | 2 | 97 | 64 | 62 | 363 000 | 193 000 | 1,85 |
| 16 | 92 | 54 | 1 | 0,30 | 0,8 | 90 | 22 | 20 | 145 000 | 83 000 | 1,75 |

*: non mesurable

Du tableau II il apparaît que lors de l'utilisation de $CO_2$ supercrique, toutes choses étant égales par ailleurs, l'augmentation de pression de $CO_2$ provoque une diminution du rendement en polymère (Rdt x RR) ainsi que de sa masse molaire. Par ailleurs dans des conditions isobares une augmentation de la température, diminuant la densité de $CO_2$ provoque une augmentation de la masse molaire du polymère sans en altérer le rendement en polymère qui demeure sensiblement identique ; ceci confirme les résultats obtenus de variation de pression puisqu'une augmentation de température a la même influence sur la densité du $CO_2$ qu'une diminution de pression. Ensuite, l'augmentation de la durée de polymérisation provoque une augmentation du rendement en polymère et de sa masse molaire, résultat identique à celui obtenu lors de la polymérisation en masse classique des polydiorganosiloxanes par les méthodes connues. Enfin l'augmentation de la concentration initiale en monomère $(D_4)_0$ provoque une augmentation du rendement en polymère ainsi que de sa masse molaire.

-Exemples 17 à 19 :

On reproduit le mode opératoire de l'exemple 4 (durée de polymérisation 1 heure), sauf que l'on ajoute de l'hexaméthyldisiloxane ($M_2$) au $D_4$ de départ afin d'obtenir des huiles polydiméthysiloxanes bloquées. Les résultats obtenus sont rassemblés dans le tableau III ci-après :

**Tableau III**

| Ex. | P bars | T °C | $[D_4]_0$: $(M_2)_0$ moles/l | Rdt $g.kg^{-1}$ | détente % | RR % | Rdt x RR % | Mw | OH ppm |
|---|---|---|---|---|---|---|---|---|---|
| 17 | 120 | 60 | 2 | 2,66 | 97 | 24 | 23 | 30 000 | 85 |
| 18 | 90 | 52 | 2 | 2,66 | 97 | 20 | 19 | 25 000 | 90 |
| 19 | 102 | 55 | 2 | 0,50 | 94 | 15 | 14 | 90 000 | 150 |

-Exemples 20 et 21 :

On reproduit le mode opératoire de l'exemple 4 en modifiant la charge d'oligomère, qui est constituée dans l'exemple 20 par 30 g d'un mélange de 75 % en poids de polydiméthylcyclosiloxane $D_n$ (n compris entre 3 et 6 inclusivement) et 25 % d'alpha, oméga-dihydroxypolydiméthylsiloxane ayant une teneur en groupement hydroxyle compris entre 0,8 et 1,5 g par kg et dans l'exemple 21 par 30 g de la même huile alpha, oméga dihydroxypolydiméthylsiloxane.

Les résultats sont rassemblés dans le tableau IV ci-après :

Tableau IV

| Ex. | P bars | T °C | Rdt détente % | RR % | Rdt x RR % | Mw | Mn | Ip | OH ppm |
|---|---|---|---|---|---|---|---|---|---|
| 20 | 93 | 54 | 100 | 42 | 42 | 116 000 | 54 000 | 2,1 | 465 |
| 21 | 107 | 53 | 100 | 98 | 98 | 200 000 | 120 000 | 1,7 | non dosable |

Exemples 22 et 23 :

On utilise l'appareillage et le mode opératoire de l'exemple 4 en introduisant dans le réacteur 30 g de $D_4$ et 3 g de silice, ce mélange étant préalablement chauffé sous azote à 150° C pendant une heure afin de le sécher.

On utilise comme catalyseur l'acide trifluorométhanesulfonique à une concentration initiale de $6.10^{-3}$ M/l de $D_4$. Après une durée de polymérisation de l'ordre d'une heure aux conditions de température et de pression désirées, on détend le $CO_2$. L'empâtage obtenu est traité avec de la triéthylamine pour neutraliser le catalyseur, puis est mis en solution dans un mélange 50/50 toluène-ammoniaque sous agitation pendant 24 heures. La phase organique est décantée puis le solvant est évaporé, sous vide. Les résultats obtenus sont rassemblés dans le tableau V ci-après.

Tableau V

| Exemple | P bars | T °C | Durée heure | $(D_4)_0$ moles/l | Mw |
|---|---|---|---|---|---|
| 22 | 87 | 57 | 1 | 2 | 271 000 |
| 23 | 90 | 88 | 1 | 2 | 483 000 |

**Revendications**

1. - Procédé de polymérisation par catalyse acide ou basique d'oligomères polydiorganosiloxanes en vue d'obtenir un polydiorganosiloxane de masse moléculaire élevée, caractérisé en ce qu'on effectue la polymérisation dans au moins un fluide sous pression supraatmosphérique qui est un gaz dans les conditions normales de température et de pression, l'état physique dudit fluide étant durant la polymérisation choisi parmi l'état de gaz sous pression supraatmosphérique, l'état liquide et l'état supercritique et en ce qu'on récupère le polydiorganosiloxane de masse moléculaire élevée par détente dudit fluide.

2. - Procédé selon la revendication 1, caractérisé en ce qu'on effectue la détente à pression atmosphérique.

3. - Procédé selon la revendication 1 ou 2, caractérisé en ce que les oligomères de polysiloxane sont choisis parmi :

- au moins un polydiorganocyclosiloxane (a) de formule :

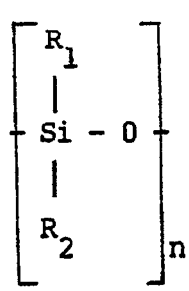

(a)

- au moins un polydiorganosiloxane (b) de formule :

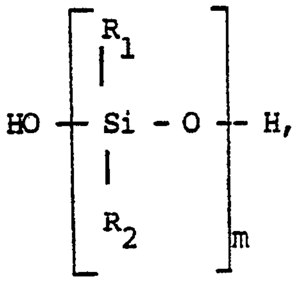

(b)

et leurs mélanges

dans lesquelles les divers symboles représentent :

- n : un nombre entier supérieur ou égal à 3 et généralement inférieur à 10.

- $R_1$ : un atome d'hydrogène, un radical alkyle, alkényle, halogénoalkyle, halogénoalkényle, ces divers radicaux ayant de 1 à 5 atomes de carbone et comportant la cas échéant de 1 à 6 atomes de chlore et/ou de fluor ; un radical cycloalkyle, cycloalkényle ces radicaux ayant de 3 à 8 atomes de carbone et étant éventuellement substitués par 1 à 4 atomes de chlore et/ou de fluor ; un radical cyanoalkyle ayant de 3 à 4 atomes de carbone ; un radical phényle, alkylphényle ou phénylalkyle ayant de 6 à 8 atomes de carbone, ces radicaux étant éventuellement substitués par 1 à 4 atomes de chlore et/ou de fluor.

- $R_2$ : un radical tel que $R_1$ ou encore un groupement alkoxy de formule $-OR_1$, ou un radical hydroxy.

- et m est un nombre entier compris entre 2 et 100 inclus.

4. - Procédé selon la revendication 3, caractérisé en ce que les oligomères (a) et (b) peuvent en outre contenir au moins un polydiorganosiloxane (c) de formule :

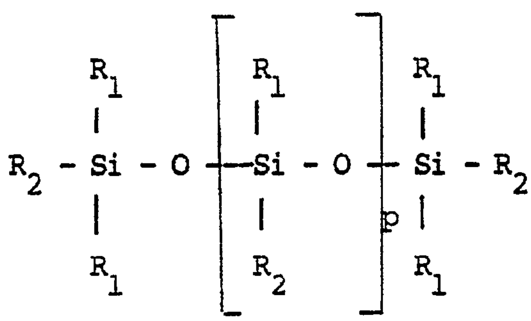

(c)

et/ou un polydiorganosiloxane (d) de formule :

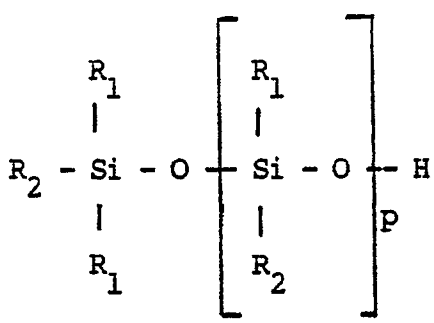

(d)

dans lesquelles $R_1$ et $R_2$ ont la signification donnée à la revendication 3 et p est 0 ou un nombre entier compris entre 1 et 50 inclus.

5. - Procédé selon l'une quelconque des revendications précédentes, caractérisé en ce que le fluide utilisé est du $CO_2$.

6. - Procédé selon la revendication 5, caractérisé en ce que le catalyseur est choisi parmi un acide de Brönstedt ou de Lewis.

7. - Procédé selon la revendication 6, caractérisé en ce que le catalyseur est un acide perfluoroalcanesulfonique.

8. - Procédé selon l'une quelconque des revendications 5 à 7, caractérisé en ce que $CO_2$ lors de la polymérisation est un gaz sous pression supraatmosphérique ou à l'état supercritique.

9. - Procédé selon l'une quelconque des revendications précédentes, caractérisé en ce qu'au moins une partie de la polymérisation est effectuée en présence d'une charge compatible avec le fluide de polymérisation et le catalyseur.

**Patentansprüche**

1. Verfahren zur Polymerisation von Polydiorganosiloxanoligomeren durch saure oder basische Katalyse, um ein Polydiorganosiloxan mit hoher Molekularmasse zu erhalten, dadurch gekennzeichnet, daß man die Polymerisation in wenigstens einem Fluid unter überatmosphärischem Druck, das unter normalen Temperatur- und Druckbedingungen ein Gas ist, bewirkt, wobei der physikalische Zustand dieses Fluids während der Polymerisation ausgewählt ist unter dem Gaszustand unter überatmosphärischem Druck, flüssigem Zustand und überkritischem Zustand, und daß man das Polydiorganosiloxan mit hohem Molekulargewicht durch Entspannung dieses Fluids gewinnt.

2. Verfahren gemäß Anspruch 1, dadurch gekennzeichnet, daß die Entspannung bei Atmosphärendruck durchgeführt wird.

3. Verfahren gemäß Anspruch 1 oder 2, dadurch gekennzeichnet, daß die Polysiloxanoligomeren ausgewählt sind unter:

– mindestens einem Polydiorganocyclosiloxan (a) der Formel:

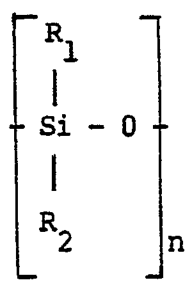

(a)

– mindestens einem Polydiorganosiloxan (b) der Formel:

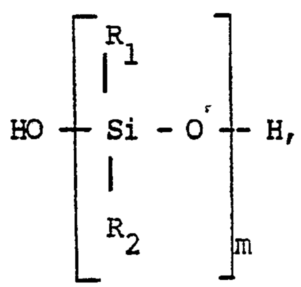

(b)

und deren Gemischen, worin die verschiedenen Symbole bedeuten:

– n: eine ganze Zahl größer oder gleich 3 und im allgemeinen unterhalb 10;

– $R_1$: ein Wasserstoffatom, einen Alkyl-, Alkenyl-, Halogenalkyl-, Halogenalkenylrest, wobei diese verschiedenen Reste 1 bis 5 Kohlenstoffatome haben und gegebenenfalls 1 bis 6 Chloratome und/oder Fluoratome tragen; einen Cycloalkyl-, Cycloalkenylrest, wobei diese Reste 3 bis 8 Kohlenstoffatome haben und gegebenenfalls durch 1 bis 4 Chlor- und/oder Fluoratome substituiert sind, einen Cyanoalkylrest mit 3 bis 4 Kohlenstoffatomen; einen Phenyl-, Alkylphenyl- oder Phenylalkylrest mit 6 bis 8 Kohlenstoffatomen, wobei diese Reste gegebenenfalls durch 1 bis 4 Chlor- und/oder Fluoratome substituiert sind;

– $R_2$: einen Rest wie $R_1$ oder auch eine Alkoxygruppe der Formel $-OR_1$, oder einen Hydroxyrest;

– und m ist eine ganze Zahl zwischen 2 und 100 einschließlich.

4. Verfahren gemäß Anspruch 3, dadurch gekennzeichnet, daß die Oligomeren (a) und (b) außerdem mindestens ein Polydiorganosiloxan (c) der Formel:

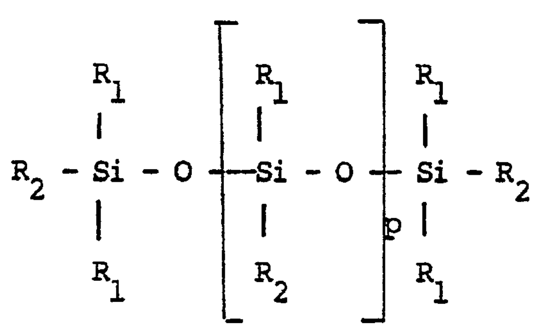

(c)

und/oder ein Polydiorganosiloxan (d) der Formel:

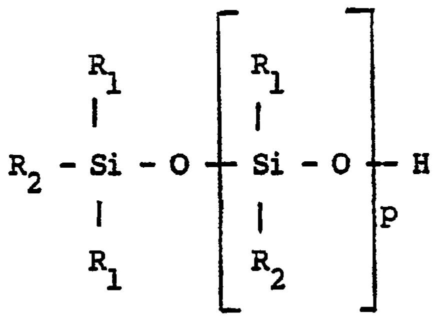

(d)

enthalten können, worin $R_1$ und $R_2$ die in Anspruch 3 angegebene Bedeutung haben und p gleich 0 oder eine ganze Zahl zwischen 1 und 50 einschließlich ist.

5. Verfahren gemäß einem der vorhergehenden Ansprüche, dadurch gekennzeichnet, daß das verwendete Fluid $CO_2$ ist.

6. Verfahren gemäß Anspruch 5, dadurch gekennzeichnet, daß der Katalysator ausgewählt ist aus einer Brönstedt- oder Lewis-Säure.

7. Verfahren gemäß Anspruch 6, dadurch gekennzeichnet, daß der Katalysator eine Perfluoralkansulfonsäure ist.

8. Verfahren gemäß einem der Ansprüche 5 bis 7, dadurch gekennzeichnet, daß $CO_2$ während der Polymerisation ein Gas unter überatmosphärischem Druck oder in überkritischem Zustand ist.

9. Verfahren gemäß einem der vorhergehenden Ansprüche, dadurch gekennzeichnet, daß mindestens ein Teil der Polymerisation in Gegenwart eines Füllstoffs durchgeführt wird, der mit dem Polymerisationsfluid und dem Katalysator verträglich ist.

## Claims

1. Process for acid- or base-catalysed polymerization of polydiorganosiloxane oligomers with a view to obtaining a polydiorganosiloxane of high molecular mass, characterized in that the polymerization is carried out in at least one fluid under supraatmospheric pressure, which is a gas under normal conditions of temperature and of pressure, the physical state of the said fluid being during the polymerization chosen from the state of a gas under supraatmospheric pressure, the liquid state and the supercritical state and in that the polydiorganosiloxane of high molecular mass is recovered by expansion of the said fluid.

2. Process according to Claim 1, characterized in that the expansion is performed at atmospheric pressure.

3. Process according to Claim 1 or 2, characterized in that the polysiloxane oligomers are chosen from:

– at least one polydiorganocyclosiloxane (a) of formula:

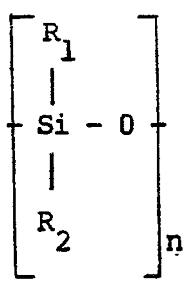

(a)

– at least one polydiorganosiloxane (b) of formula:

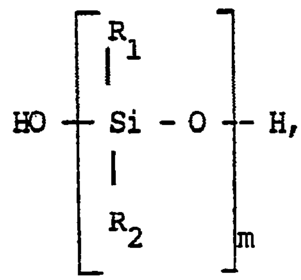

(b)

and mixtures thereof in which the various symbols denote:

– n: an integer greater than or equal to 3 and generally smaller than 10;

$R_1$: a hydrogen atom or an alkyl, alkenyl, haloalkyl or haloalkenyl radical, these various radicals containing from 1 to 5 carbon atoms and comprising, where appropriate, from 1 to 6 chlorine and/or fluorine atoms; a cycloalkyl or cycloalkenyl radical, these radicals containing from 3 to 8 carbon atoms and being optionally substituted by 1 to 4 chlorine and/or fluorine atoms; a cyanoalkyl radical containing from 3 to 4 carbon atoms; or a phenyl, alkylphenyl or phenylalkyl radical containing from 6 to 8 carbon atoms, these radicals being optionally substituted by 1 to 4 chlorine and/or fluorine atoms;

– $R_2$: a radical such as $R_1$ or else an alkoxy group of formula $-OR_1$, or a hydroxyl radical;

– and m is an integer from 2 to 100 inclusive.

4. Process according to Claim 3, characterized in that the oligomers (a) and (b) may additionally contain at least one polydiorganosiloxane (c) of formula:

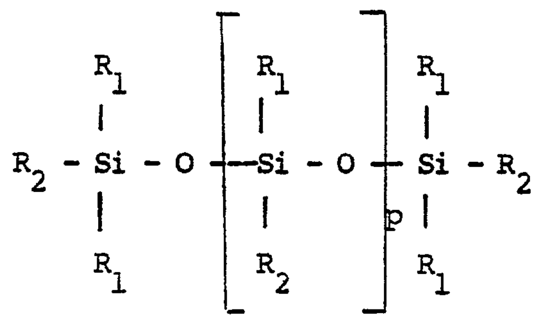

(c)

and/or a polydiorganosiloxane (d) of formula:

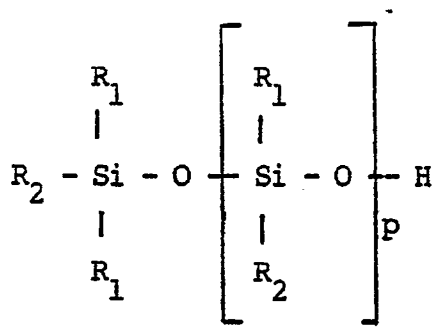

(d)

in which $R_1$ and $R_2$ have the meaning given in Claim 3 and p is 0 or an integer from 1 to 50 inclusive.

5. Process according to any one of the preceding claims, characterized in that the fluid employed is $CO_2$.

6. Process according to Claim 5, characterized in that the catalyst is chosen from a Brønsted or Lewis acid.

7. Process according to Claim 6, characterized in that the catalyst is a perfluoralkanesulphonic acid.

8. Process according to any one of Claims 5 to 7, characterized in that $CO_2$ during the polymerization is a gas under supraatmospheric pressure or in the supercritical state.

9. Process according to any one of the preceding claims, characterized in that at least a part of the polymerization is performed in the presence of a filler compatible with the polymerization fluid and the catalyst.

PLANCHE UNIQUE